# EUROPEAN PATENT APPLICATION

(11) **EP 2 330 395 A1**
(43) Date of publication of application: **08.06.2011**
(21) Application number: 09816032.8
(22) Date of filing: 02.09.2009
(51) Int. Cl.: G01L 1/20

(54) **PRESSURE SENSOR**

(30) Priority: 29.09.2008 JP 2008249688
(71) Applicant: Nissha Printing Co., Ltd., Kyoto-shi, Kyoto 604-8551 (JP)
(72) Inventor: OKUMURA Shuzo, Kyoto-shi Kyoto 604-8551 (JP); OMOTE Ryomei, Kyoto-shi Kyoto 604-8551 (JP); KAI Yoshihiro, Kyoto-shi Kyoto 604-8551 (JP); TAKAI Yuichiro, Kyoto-shi Kyoto 604-8551 (JP)
(74) Representative: Lemcke, Brommer & Partner
(86) International application number: PCT/JP2009/065308
(87) International publication number: WO 2010/035615

(57) **Abstract**

A pressure sensor (40) comprises a pair of electrodes (16a), (16b), a base film (31) on which at least one electrode is disposed, an upper film (6) facing the base film (31), a pressure sensitive ink layer (30) disposed so as to be able to cover the pair of electrodes (16a, 16b) and having electrical characteristics changed by applied pressing force, and a spacer (10) having adhesive properties and interposed between the base film (31) and the upper film (6).

## Description

### TECHNICAL FIELD

The present invention relates to a pressure sensor for measuring the pressure distribution in a component perpendicular to a surface when external pressure has been applied to the surface.

### BACKGROUND ART

An example of a configuration of a pressure sensor for distributing external pressure applied to a surface is described in Patent Literature 1. In one of these sensors, as shown in FIG. 1 of Patent Literature 1, two sheets of film are separated by a spacer to form an air layer, an upper electrode is disposed on the upper film, a lower electrode is disposed on the lower film, and a pressure sensitive ink layer is disposed between the two.

When pressure is applied to the upper film, the upper electrode and the lower electrode are rendered conductive in the vertical direction in the portion sustaining the pressure, output is obtained only in the lower electrode corresponding to the intersection, and the pressure distribution is outputted. When a pressure sensor is disposed inside a vehicle seat, it can be determined whether a passenger is sitting on the seat, and the physical attributes of the passenger can be determined from the pressure distribution.

In the pressure sensor disclosed in Patent Literature 1, a spacer is disposed to create an air layer between the upper film and the lower film. When pressure is applied, the electrodes make contact via a pressure sensitive ink layer, and the pressure is measured from the change in the resistance value based on the pressure applied to the pressure sensitive ink layer.

However, when the film deteriorates over time due to use, the upper film sags and it becomes difficult to control contact between the pressure sensitive ink layer and the electrodes based on the load. Because of this, the reproducibility of the resistance value between the pressure sensitive ink layer and the electrodes due to a load is low, and the pressure is difficult to measure with precision. Also, because this pressure sensor is configured so that electrodes are disposed in most of the film surface, the transparency of the pressure sensor is poor.

In order to solve this problem, the applicant filed a patent application for a pressure sensor having a configuration in which a pair of electrodes is disposed on the lower film, and the pair of electrodes is covered with a pressure sensitive conductive ink layer. In this pressure sensor, because a pair of electrodes is disposed on the lower film, and the pressure sensitive conductive ink layer disposed on the upper film normally covers the electrodes, a spacer does not have to be disposed to form an air layer. As a result, the sensor can assume any shape based on the arrangement of the electrodes. By configuring the pair of electrodes in the shape of a frame, the central portion of the pressure sensor can be transparent. This enables a touch panel to be disposed in this portion.

[Patent Literature 1] Japanese Laid-open Patent Publication No. 2002-48658

### SUMMARY OF THE INVENTION

### Problem That the Invention Is Intended to Solve

However, in a pressure sensor with this configuration, because a small load results in a small change in the resistance value of the pressure sensitive conductive ink layer, the amount of current flowing between the pressure sensitive conductive ink layer and the electrodes remains nearly constant, and pressure detection is difficult to perform with precision.

Since the pair of electrodes remain conductive even when no load is applied, power is consumed unnecessarily.

Therefore, the technical problem that the present invention is intended to resolve is to provide a pressure sensor that can overcome the aforedescribed problems, detect pressure even when there is a small load, and eliminate unnecessary power consumption.

### Means for Solving the Problems

In order to solve this technical problem, the present invention provides a pressure sensor having the following configuration.

A first aspect of the present invention comprises a pair of electrodes; a base film on which at least one electrode is arranged; an upper film facing the base film; a pressure sensitive ink layer arranged so as to be able to cover the pair of electrodes and having electrical characteristics that change under an applied pressing force; and an adhesive spacer interposed between the base film and the upper film.

According to the aspect described above, a pair of electrodes and a pressure sensitive ink layer can be disposed between the base film and the upper film. A spacer having adhesive properties is interposed between the base film and the upper film. Thus, the spacer can be disposed between the pair of electrodes and the pressure sensitive ink layer. Here, the pressure sensitive ink layer and the pair of electrodes are usually separated by the spacer. Even when the upper film sags over time, direct contact is not made between the pressure sensitive ink layer and the pair of electrodes due to the adhesive spacer. As a result, the electrodes are not rendered conductive via the pressure sensitive ink layer.
When compressive pressure is applied, the pressure sensitive ink layer and the pair of electrodes readily make contact, and the electrodes are rendered conductive via the pressure sensitive ink layer. Therefore, the resistance value between the pressure sensitive ink layer and the electrodes can be controlled based on the load, and even low loads are sensed reliably. Because the pressure sensitive ink layer and the pair of electrodes remain laminated due to the adhesiveness of the spacer, the laminating step and assembly step can be performed efficiently.

According to a second aspect of the present invention, the spacer is vertically interposed between the pair of electrodes.

Because the pair of electrodes is disposed vertically in this configuration, an electrode can be disposed, respectively, on the base film and the upper film. In this configuration, the pair of electrodes and the spacer are disposed in the direction of the pressure when compressive pressure is applied. As a result, the pressure sensitive ink layer and the pair of electrodes are able to make contact reliably when pressed down.

According to a third aspect of the present invention, the pair of electrodes is arranged on the base film.

Because the pair of electrodes can be placed side by side on the base film in this configuration, the thickness of the pressure sensor can be reduced.

According to a fourth aspect of the present invention, the spacer contains a filler having a sphericity of 0.85 to 0.98, and an average particle size of 3 to 40 µm.

Because the adhesiveness of the spacer is set to the proper amount in this configuration, the sensing can be performed more reliably.

According to a fifth aspect of the present invention, a material used for the spacer is an addition-reaction-type liquid silicone resin.

Because the spacer is sufficiently flexible and elastic, and also has adhesive properties, it reliably transmits pressing force and performs sensing more reliably even when the load is low.

According to a sixth aspect of the present invention, the electrodes are covered with carbon.

In the aspect described above, the electrodes can be protected by a coating of carbon.

### BRIEF DESCRIPTION OF DRAWINGS

FIG. 1 is a cross-sectional view showing the configuration of a pressure sensor of the present invention;
FIG. 2 is (a) a top view showing the configuration of the pressure sensor, and (b) a top view showing a variation on the pressure sensitive ink layer shown in (a);
FIG. 3 is (a) a top view showing the configuration of the pressure sensor, (b) a top view showing a variation on the pair of electrodes shown in (a), and (c) a top view showing a second variation on the pair of electrodes shown in (a);
FIG. 4 is a schematic view showing the pressure sensitive ink layer disposed on only one electrode;
FIG. 5 is a schematic view showing the surface of one electrode coated with a carbon layer;
FIG. 6 is a cross-sectional view showing the configuration of the pressure sensor in another embodiment; and
FIG. 7 is a schematic view showing the surface of electrodes coated with a carbon layer in the pressure sensor of another embodiment.

### DESCRIPTION OF EMBODIMENTS

The following is an description of examples of the present invention made with reference to the accompanying drawings.

Pressure sensors are incorporated into electronic devices such as cellular telephones, smart phones, PDAs, car navigation devices, digital cameras, digital video cameras, and gaming devices. In this embodiment, the electronic device is a cellular telephone.

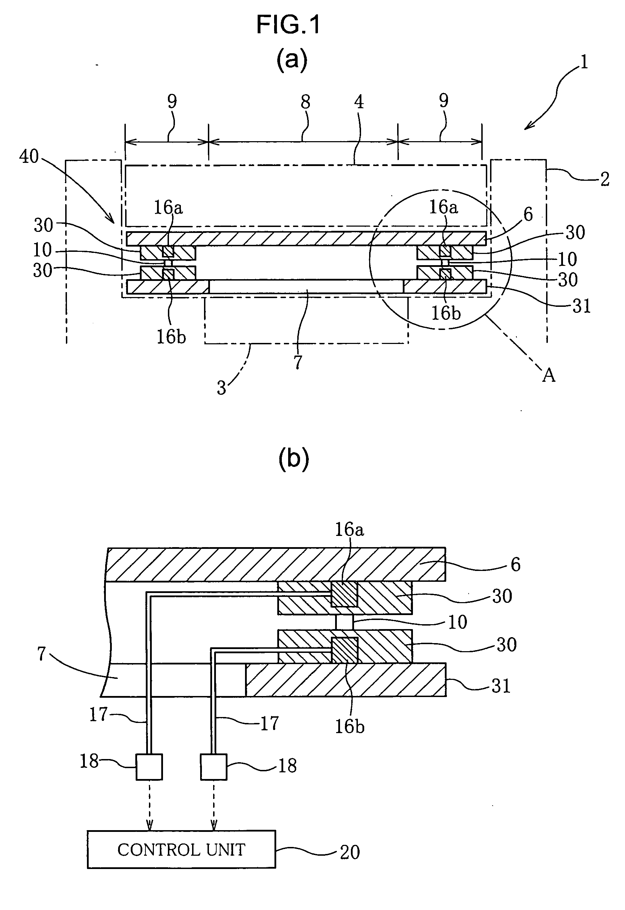

As shown in FIG. 1, a cellular telephone 1 includes a case 2 made of a synthetic resin, a display device 3 having a display unit of, for example, liquid crystals or organic EL disposed in the case 2, a pressure sensor 40 disposed on top of the display device 3, and a protective panel 4 disposed on top of the pressure sensor 40. The protective panel 4 and the pressure sensor 40 are housed in a recess in the case 2 formed where the display device 3 is installed, and the upper surface of the case 2 conforms substantially to the upper surface of the protective panel 4.

The protective panel 4 has a rectangular shape when viewed from above. The upper surface of the protective panel 4 allows the display unit in the display device 3 to be viewed from the outside. The protective panel 4 also includes a transparent display window 8 formed so as to correspond to the display unit, and a decorative portion 9 formed on the periphery of the display unit 8 and able to conceal what is inside. The protective panel 4 has a "touch input function" able to detect the X-Y coordinates of the operated position based on a touch operation performed on the protective panel 4. However, selection does not have to be performed using a touch input function. The resistance film method, the electrostatic capacitance method, or the electromagnetic induction method can be used to make selections when a touch input function is installed.

The pressure sensor 40 includes a pair of electrodes 16a, 16b, base film 31 on which at least one electrode is disposed, upper film 6 facing the base film 31, a pressure sensitive ink layer 30 disposed so as to be able to cover the pair of electrodes 16a, 16b and having electrical characteristics changed by applied pressing force, and a spacer 10 having adhesive properties and interposed between the base film 31 and the upper film 6.

In this configuration, the pair of electrodes 16a, 16b and the pressure sensitive ink layer 30 can be disposed between the base film 31 and the upper film 6. The spacer 10 is interposed between the base film 31 and the upper film 6. As a result, the spacer 10 can be arranged between the pair of electrodes 16a, 16b and the pressure sensitive ink layer 30. Here, the pressure sensitive ink layer 30 and the pair of electrodes 16a, 16b are usually separated by the spacer 10. Also, the adhesive spacer 10 keeps the pressure sensitive ink layer 30 from making direct contact with the pair of electrodes 16a, 16b even when, for example, the upper film 6 begins to sag over time. When pressing force is applied, the pressure sensitive ink layer 30 readily comes into contact with the pair of electrodes 16a, 16b. The interval is rendered conductive by the pressure sensitive ink layer 30, and the resistance value between the pressure sensitive ink layer 30 and the electrodes can be controlled based on the load.

In this embodiment, the spacer 10 is interposed vertically between the pair of electrodes 16a, 16b. Because the pair of electrodes 16a, 16b are disposed vertically in this explanation, an electrode is disposed, respectively, on the base film 31 and the upper film 6.

An opening 7 is formed in the base film 31 corresponding to the display device 3 and the display window 8. The pair of electrodes 16a, 16b are formed in an annular shape on the upper surface of the base film 31 so as to surround the opening 7. The pressure sensitive ink layer 30 is also formed on the bottom surface of the upper film 6 in ring shape in order to cover the pair of electrodes 16a, 16b and conform to the opening 7.

Examples of materials that can be used in a spacer 10 with adhesive properties include epoxyacrylate and urethane acrylate photocuring resins, and silicone, polyester and epoxy thermoset resins. Among these, an addition-reaction-type liquid silicone having flexible and elastic properties is preferred.

Specific examples of addition-reaction-type liquid silicones include a one-part liquid silicone having both a vinyl group and H-Si group in the molecule, and a two-part liquid silicone solution having two or more terminal or side chain H-Si groups.

The spacer 10 preferably contains a filler. One example of a filler is a spherical alumina powder with an average particle size of several tens of microns. This alumina powder can be manufactured using any desired method. However, the flame spraying method using aluminum hydroxide powder is preferred from the standpoint of controlling the particle size distribution and controlling particle shape. The crystal structure of the powder can be either monocrystalline or polycrystalline. The granularity of the powder can be adjusted by classifying and mixing powders.

Preferably, the sphericity of the filler is from 0.85 to 0.98, and the average particle size is from 3 µm to 40 µm (the average particle size should be at least 3 µm even when a single digit or double digit percentage of the particles have a size less than 3 µm). If the sphericity is less than 0.85, the fluidity of the powder deteriorates, and the filler becomes segregated inside the spacer. If the sphericity is greater than 0.98, the density increases, and the adhesive properties tend to be lost when used as a spacer. If the average particle size is less than 3 µm, the adhesiveness deteriorates in the spacer even when the sphericity is sufficient. If more than 15% of the particles have an average particle size less than 1 µm, the adhesiveness of the spacer is also poor, even when the average particle size is greater than 3 µm. If the average particle size is greater than 40 µm, the surface coarseness of the spacer 10 increases significantly, and the spacer becomes hard and difficult to handle.

If necessary, various types of curing agents and other additives can be compounded in the spacer 10. By properly compounding curing agents and other additives, the crosslinking density formed by the addition reaction can be adjusted, whereby the flexibility of the spacer 10 can be adjusted.

The thickness of the spacer 10 ranges from 0.2 to 500 µm, preferably from 0.5 to 100 µm. There are no particular restrictions on the planar shape of the spacer 10, which can be, e.g., polygonal, round, or oval. In order to improve adhesiveness, the coarseness should be in the range of tens of microns.

When the spacer is an addition-reaction-type liquid silicone, the materials can be mixed together using a mixer such as a roll mill, kneader, or Banbury mixer; molded using, e.g., a doctor blade method, extrusion, pressing, or calendering; and then vulcanized at a temperature around 100°C. using, e.g., a hot air dryer, infrared dryer, or microwave dryer to complete the spacer.

In the case of sphericity, the projected area (S1) and perimeter of a particle in an SEM image are measured, the area of a perfect circle (S2) is calculated based on the perimeter, and S1/S2 indicates the sphericity of the particle. Fifty randomly selected particles are measured in this manner, and the average value is used as the sphericity.

The adhesiveness is determined using a 180° peel test. The spacer is determined to be adhesive when a load of at least 0.008 N is needed to peel a 25-mm-wide spacer. In addition to the spacer 10, adhesiveness can be provided in other areas.

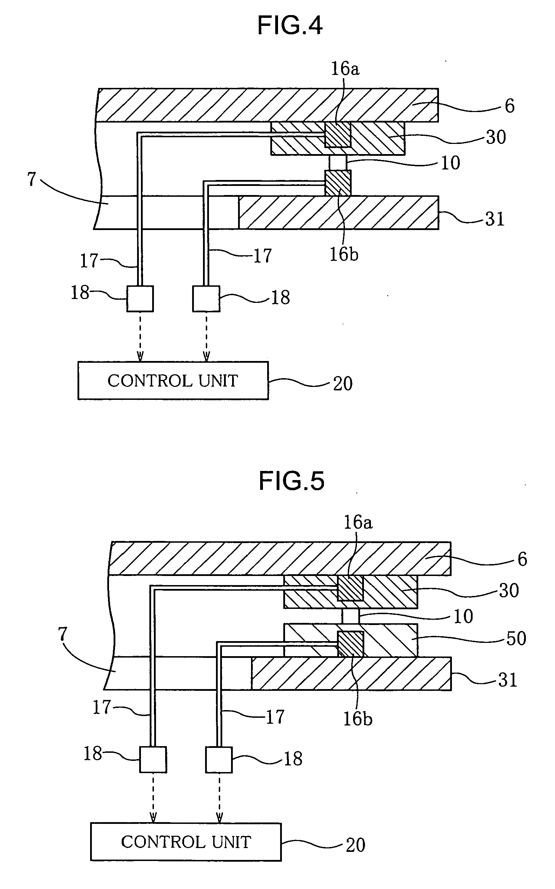

The pressure sensitive ink layer 30 is interposed between a support 2a and the periphery of the backside of the protective panel 4 with the protective panel 4 inserted in the case 2. This allows pressing force applied to the protective panel 4 to be detected (Z coordinate detection). The pressure sensitive ink layer 30 is configured so as to cover both of the electrodes 16a, 16b individually (FIG. 1), or to cover one of the electrodes 16a, 16b (FIG. 4).

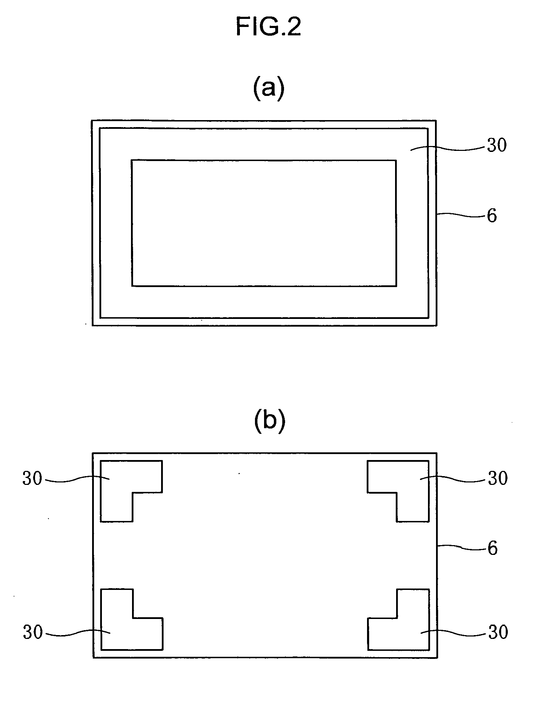

By forming the pressure sensitive ink layer 30 in a ring shape with a width from 0.2 to 20 mm along the support 2a as shown in FIG. 2a, when pressing force is applied to the protective panel 4, regardless to the pressure applied position, the pressure on the protective panel 4 is applied to the pressure sensitive ink layer 30 and the pressure sensitive ink layer 30 is rendered conductive. This allows pressing force applied to the protective panel 4 to be detected both stably and reliably.

In an analog pressure sensitive ink layer 30, the resistance value changes based on the size of the pressing force.

The materials used to make the pressure sensitive ink layer 30 can be one or more metals, other conductive or semiconductive elements and oxides, and conductive or semiconductive organic or inorganic polymers. Specific examples include one or more metals such as titanium, tantalum, zirconium, vanadium, niobium, hafnium, aluminum, silicon, tin, chromium, molybdenum, tungsten, lead, manganese, beryllium, iron, cobalt, nickel, platinum, palladium, osmium, iridium, rhenium, technetium, rhodium, ruthenium, gold, silver, cadmium, copper, zinc, germanium, arsenic, antimony, bismuth, boron, scandium, as well as lanthanides and actinides. One or more conductive agents can also be used as appropriate. Conductive fillers can be used if the basic elements are in a non-oxidized state. Powders, grains, and fibers of conductive materials can be used. Spheres with a diameter from 0.04 to 0.2 µm are preferred. The amount dispersed should be adjusted based on the desired pressure sensitivity.

The binder in the pressure sensitive ink layer 30 is a resin whose glass transition point (Tg) is higher than room temperature. Specific examples include vinyl hydrochloride/vinyl acetate copolymer resins, acrylic resins, polyurethane resins, polyester resins, epoxy resins, chlorinated polyolefins, nitrocellulose resins, ethyl cellulose resins, polyamide resins, and photocurable resins. Among these, quantum tunneling composites have superior performance as materials in pressure sensitive ink layers 30.

The pressure sensitive ink layer 30 can be formed directly on the periphery of the backside of the protective panel 4 using, for example, screen printing, a roll coater method, or a dispenser method. Preferably, the pressure sensitive ink layer 30 is formed on the base film 31 using any printing method common in the art such as screen printing, offset printing, gravure printing, or flexographic printing; and the transparent resin film 31 on which the pressure sensitive ink layer 30 has been formed is applied to the backside of the protective panel 4 using a printing method suitable for mass production such as the roll to roll (R-to-R) method. When the base film 31 on which the pressure sensitive ink layer 30 has been formed covers the entire backside of the protective panel, the cable for the protective panel 4 mentioned above is installed after the panel has been affixed.

The base film 31 on which the pressure sensitive ink layer 30 has been formed and which is itself affixed to the backside of the protective panel 4 can be a polycarbonate, polyamide, or polyether-ketone engineering plastic; or an acrylic, polyethylene terephthalate, or polybutylene terephthalate transparent film.

The thickness of the pressure sensitive ink layer 30 is from 1 to 200 µm. If the thickness exceeds 200 µm, a printing layer cannot be formed, and the layer cannot be applied to products requiring thinness such as mobile devices. The pressure detecting characteristics of the pressure sensitive ink layer 30 are uneven if the thickness is less than 1 µm.

A connector 18 connected to a control unit 20 inside the case 2 is disposed at the end of a lead wire 17 such as an FPC extending from the electrodes 16a, 16b (FIG. 1b). The control unit 20 determines that pressure has been applied to the protective panel 4 when the input load applied to the protective panel 4 transmitted via the connector 18 exceeds a threshold value. More specifically, the control unit 20 determines that pressure has been applied to the protective panel 4 when the resistance value between the pair of electrodes 16a, 16b transmitted via the connector 18 falls below a predetermined threshold value.

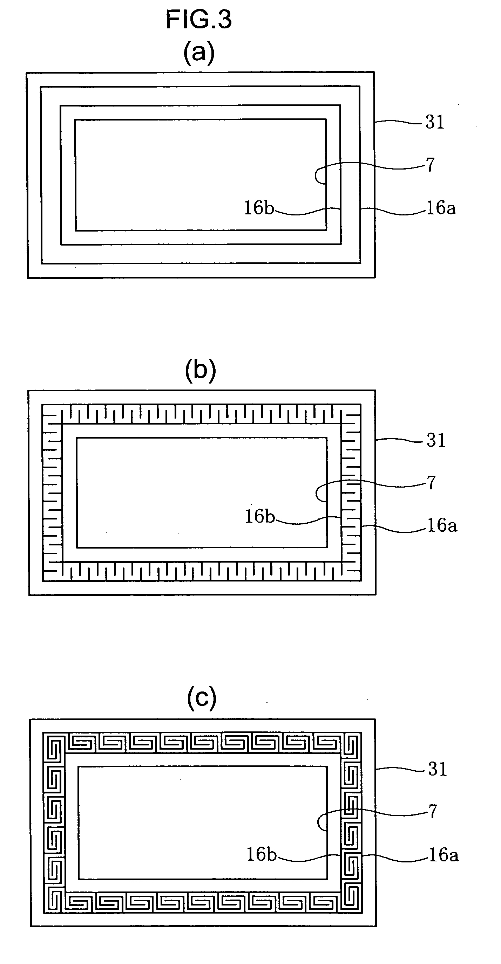

The pair of electrodes 16a, 16b can be linear, as shown in FIG. 3a. Or the pair of electrodes 16a, 16b can be comb-shaped. The comb-shaped electrodes can be ring-shaped, with teeth thereof meshed with each other, so as to surround the opening 7 (FIG. 3b). Because the projected area of the electrodes 16a, 16b on the pressure sensitive ink layer 30 is greater in this configuration, contact is readily established between the pressure sensitive ink layer 30 and the electrodes 16a, 16b, and they are readily rendered conductive when pressure is applied to the pressure sensor 40. This can improve pressure sensitivity. When the pressure sensitive ink layer 30 is formed only in the corner portions as shown in FIG. 2b, the electrodes 16a, 16b can be comb-shaped only in the corner portions corresponding to the areas in which the pressure sensitive ink layer 30 is formed.

### (1st Alternative Embodiment)

The surface of the electrodes 16 can be covered with a carbon layer 50 (FIG. 5). In FIG. 5, the electrode 16a arranged on the upper film 6 was covered with the pressure sensitive ink layer 30, and the electrode 16b arranged on the base film 31 was covered with a carbon layer 50. In this configuration, the electrode 16b can be protected by being coated with the carbon layer 50.

### (2nd Alternative Embodiment)

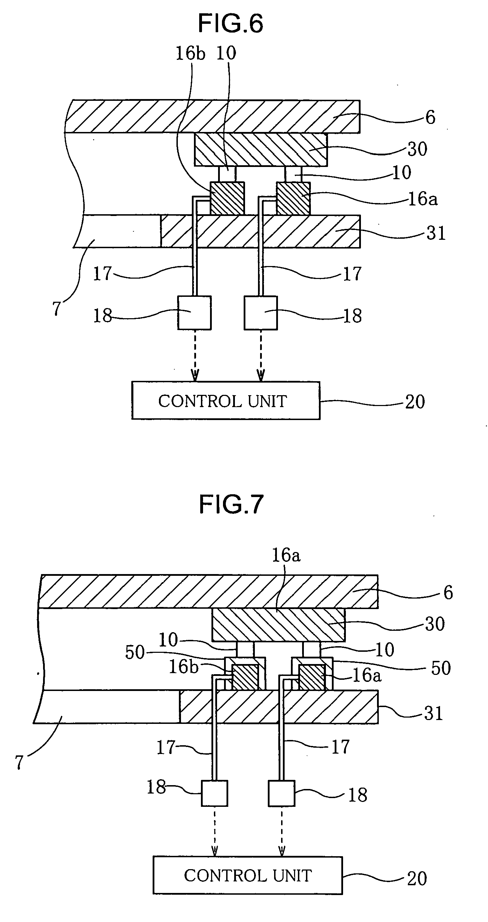

In the embodiment described above, the spacer 10 was interposed between the pair of electrodes 16a, 16b in the vertical direction. However, the present invention is not restricted to this embodiment. For example, the pair of electrodes 16a, 16b can be arranged on the base film 31 (FIG. 6). Here, the pressure sensitive ink layer 30 is arranged in certain locations so as to be able cover both electrodes 16a, 16b. Because the pair of electrodes can be arranged side by side on the base film in this configuration, the thickness of the pressure sensor can be reduced.

The pair of electrodes 16a, 16b can also be covered with a carbon layer 50 (FIG. 7).

### Example 1

The following is a more detailed explanation of the present invention with reference to examples and comparative examples.

### <Production of the filler (alumina powder)>

Aluminum hydroxide powder with an average particle size of 27 µm was added to pure water to prepare a slurry with a 45% powder concentration. The slurry was sprayed at a rate of 14 kg/h from the center of a two-fluid nozzle into the flames of a combustion furnace using oxygen gas with a gauge pressure of 0.2 MPa and a flow rate of approximately 12 Nm³/h. From the burner was sprayed a gas mixture of 5 Nm³/h LPG and 7 Nm³/h oxygen gas for the inner flame, and from the outermost peripheral space of the burner was sprayed a gas mixture of 4 Nm³/h LPG and 13 Nm³/h oxygen gas for the outer flame. The alumina powder recovered from the cyclone furnace was measured using a laser diffraction scattering-type particle size distribution measuring device. The sphericity was 0.95, and the average particle size was 48 µm.

### <Production of the spacer>

An addition reaction silicone resin (Dow Corning Toray SE1885) and the alumina powder manufactured using the aforementioned method were mixed together to produce a resin composition. The resulting resin composition was vacuum-degassed at room temperature, and a doctor blade method was used to form a 5 µm sheet. The resulting sheet was allowed to stand for five hours in a dryer at 150°C, where it was vulcanized and cured to produce a spacer.

### <Evaluation of spacer adhesiveness>

The spacer manufactured as described above was cut to a size of 25 mm by 100 mm, affixed to commercially available PET film, and subjected to 20 N of pressing force. The PET film was stretched in the 180° direction at a rate of 10 mm/min. using a tensile strength testing device, and the 180° peel strength was measured. The measurement result was low; i.e., 0.008 N, but an adhesive property was evident.

### <Formation of the pressure sensitive ink layer>

Pressure sensitive ink consisting of a quantum tunneling composite (QTC from Peratech (U.K.)) was formed into a 10-µm-thick, 3-mm-wide loop shape on top of polycarbonate using the screen printing method, and the polycarbonate film on which this pressure sensitive ink layer had been formed was affixed to the backside of a protective panel.

### <Installation of the spacer>

A pair of comb-shaped electrodes was formed on top of a polyester film, and the polycarbonate film affixed to the backside of the protective panel was disposed on top of the polyester film. The adhesive spacer was then disposed to oppose the pressure sensitive ink layer on the surface of the comb-shaped electrodes formed on top of the polyester film.

### <Protective panel evaluation results>

### (1) Z-Axis (pressure) detection

Pressure was applied with the tip of a R 0.8 polyacetal pen to the surface of the protective panel in this configuration, and the change in the resistance value was measured. The resistance of the pressure sensitive ink layer gradually decreased as the pen input load increased between 0 and 2 N (approximately 200 gf). In this measurement, it was clear that the pen input load could be detected based on the change in the resistance value.

### (2) Durability in high-temperature environments

The pressure detection operation was then confirmed after leaving the protective panel in a high-temperature environment (85°C) for 16 hours. As a result, hardly any change in the F-R characteristics was observed after the panel had been placed in the high-temperature environment. Also, there was no expansion of the pressure sensitive ink layer in the high-temperature environment. As a result, the sensitivity did not decrease, and there was no adverse connection with the electrodes.

### Example 2

As shown in FIG. 2b, the configuration was similar to that of the first example except that the pressure sensitive ink layer 30 was disposed on the bottom surface of the upper film 6 in the portions corresponding to the corner portions on the backside periphery of the protective panel 4, and the protective panel 4 functioned as a cross switch. The results were similar to the first example.

### Example 3

As shown in FIG. 3c, the configuration was similar to the first example except that the pair of electrodes 16a, 16b was spiral shaped. The results were similar to the first example. When the pair of electrodes 16a, 16b is spiral shaped, the projected area of the electrodes 16a, 16b towards the pressure sensitive ink layer 30 is larger. Thus, when pressure is applied to the pressure sensor 40, the pressure sensitive ink layer 30 readily makes contact with the electrodes 16a, 16b, and can readily be rendered conductive. In this way, pressure sensitivity can be improved. When a pressure sensitive ink layer 30 is formed only in the corner portions as in FIG. 2b, the pair of electrodes 16a, 16b correspond to the portions in which a pressure sensitive ink layer 30 has been formed, and form a spiral shape only in the corner portions.

### INDUSTRIAL APPLICABILITY

The present invention can be used in a pressure sensor for measuring the pressure distribution in a component perpendicular to a surface when external pressure has been applied to the surface.

### Reference Signs List

- 1: Cellular telephone
- 2: Case
- 3: Display device
- 4: Protective panel
- 6: Upper film
- 7: Opening
- 8: Display window
- 9: Decorative portion
- 10: Spacer
- 16a, 16b: Electrodes
- 17: Lead wire
- 18: Connector
- 20: Control unit
- 30: Pressure sensitive ink layer
- 31: Base film
- 40: Pressure Sensor
- 50: Carbon layer

## Claims

1. A pressure sensor **characterized by**:
a pair of electrodes;
a base film on which at least one electrode is arranged;
an upper film facing the base film;
a pressure sensitive ink layer arranged so as to be able to cover the pair of electrodes and having electrical characteristics that change under an applied pressing force; and
an adhesive spacer interposed between the base film and the upper film.

2. The pressure sensor according to claim 1, **characterized in that** the spacer is vertically interposed between the pair of electrodes.

3. The pressure sensor according to claim 1, **characterized in that** the pair of electrodes is arranged on the base film.

4. The pressure sensor according to any of claims 1 through 3, **characterized in that** the spacer contains a filler having a sphericity of 0.85 to 0.98, and an average particle size of 3 to 40 µm.

5. The pressure sensor according to any of claims 1 through 4, **characterized in that** a material used for the spacer is an addition-reaction-type liquid silicone resin.

6. The pressure sensor according to any of claims 1 through 5, **characterized in that** the electrodes are covered with carbon.
